# EUROPÄISCHE PATENTANMELDUNG

(11) **EP 1 137 146 A2**
(43) Veröffentlichungstag der Anmeldung: **26.09.2001**
(21) Anmeldenummer: 01106652.9
(22) Anmeldetag: 16.03.2001
(51) Int. Cl.: H02H 11/00

(54) **Selektiver Leitungsschutzschalter**

(30) Priorität: 17.03.2000 DE 10013110
(71) Anmelder: AEG Niederspannungstechnik GmbH & Co. KG, 24534 Neumünster (DE)
(72) Erfinder: Ulbricht, Andre, 31785 Hameln (DE); Nagel, Wolfgang, 33335 Gütersloh (DE)
(74) Vertreter: Böckelen, Rainer

(57) **Zusammenfassung**

Gezeigt wird ein Schutzschalter mit einem Hauptkontakt zum Schließen des Schutzschalters, bei dem erfindungsgemäß eine Sperreinrichtung zum Verhindern des Schließens des Hauptkontaktes im Kurzschlussfall vorgesehen ist. Der Hauptkontakt kann dabei in einem Hauptpfad angeordnet sein, während in einem Nebenpfad, der zumindest den Hauptkontakt überbrückt, ein Nebenkontakt und ein erstes magnetisches System angeordnet sind. Beim Schließen des Schutzschalters wird zuerst der Nebenkontakt und dann der Hauptkontakt geschlossen. Im Kurzschlussfall wird daher beim Schließen des Schutzschalters die Sperreinrichtung von dem ersten magnetischen System aktiviert bevor der Hauptkontakt geschlossen werden kann. Hierdurch werden die Lebensdauer des Schutzschalters sowie die Betriebssicherheit sowohl des Schutzschalters als auch der zu schützenden Einrichtung maßgeblich erhöht (Figur).

## Beschreibung

Die Erfindung bezieht sich auf einen Schutzschalter zum Schutz elektrischer Leitungen in elektrischen Versorgungssystemen.

Zum Schutz solcher elektrischer Leitungen gegen Zerstörung im Falle einer Überlastung oder im Falle des Auftretens eines Kurzschlusses werden üblicherweise sogenannte Leitungsschutzschalter verwendet. Jedem Stromkreis, an dem ein oder mehrere Verbraucher angeschlossen sein können, ist dabei ein Leitungsschutzschalter zugeordnet, dessen Nennstrom an den Leitungsdurchmesser angepasst ist. Solche Leitungsschutzschalter umfassen üblicherweise ein magnetisches System, das im Kurzschlussfall anspricht, und ein thermisches System, das bei Auftreten einer Überlast anspricht. Das magnetische System löst den Leitungsschutzschalter schnell aus, wohingegen das thermische System den Leitungsschutzschalter verzögert auslöst.

Darüber hinaus sind sogenannte selektive Leitungsschutzschalter bekannt, die auch als Vorautomaten bezeichnet werden. Solche selektiven Leitungsschutzschalter werden einer Mehrzahl von normalen Leitungsschutzschaltern vorgeschaltet. Grundsätzlich umfassen selektive Leitungsschutzschalter in einem Hauptpfad alle Elemente eines herkömmlichen Leitungsschutzschalters. Darüber hinaus ist üblicherweise in einem selektiven Leitungsschutzschalter noch ein Nebenpfad vorgesehen, der nur dann aktiv wird, wenn der Hauptkontakt des Hauptpfades geöffnet ist. Dieser Nebenpfad enthält u.a. Elemente, die verhindern sollen, dass bei Fortbestehen des Kurzschlusses hinter dem selektiven Leitungsschutzschalter eine Beschädigung der Leitung auftritt.

Eine hohe Belastung beider Arten von Schutzschaltern tritt dann auf, wenn der Schutzschalter auf einen Kurzschluss reagieren muss. Daher hängt die Lebensdauer von Schutzschaltern maßgeblich davon ab, wie oft der Schutzschalter auf den Kurzschluss reagieren musste. Die maximale Belastung von Schutzschaltern entsteht dann, wenn nach Auftreten eines Kurzschlusses der Leitungsschutzschalter wieder geschlossen wird, obwohl der Kurzschluss noch fortbesteht. Dann muss der Leitungsschutzschalter, der noch von der letzten Kurzschlussauslösung stark erwärmt ist, wiederum auf einen Kurzschluss reagieren, was zu einer weiteren Erhitzung des Gerätes führt.

Der Erfindung liegt daher die Aufgabe zugrunde, einen Schutzschalter zu schaffen, bei dem eine Überhitzung weitgehend verhindert werden kann.

Diese Aufgabe wird durch einen Schutzschalter mit den in Patentanspruch 1 angegebenen Maßnahmen auf besonders vorteilhafte Art und Weise gelöst.

Der erfindungsgemäße Schutzschalter weist zur Lösung dieser Aufgabe eine Sperreinrichtung auf, die ein Schließen des Hauptkontaktes im Kurzschlussfall verhindert.

Bei Anwendung der Erfindung bei einem selektiven Leitungsschutzschalter sind dabei in einem Nebenpfad, der zumindest den Hauptkontakt in einem Hauptpfad überbrückt, ein erstes magnetisches System und ein Nebenkontakt angeordnet. Der erfindungsgemäße Schutzschalter ist dabei derart ausgestaltet, dass beim Schließen des Schutzschalters zuerst der Nebenkontakt und dann der Hauptkontakt geschlossen wird. Hierdurch kann im Kurzschlussfall sichergestellt werden, dass beim Schließen des Schutzschalters die Sperreinrichtung von dem ersten magnetischen System aktiviert wird, bevor der Hauptkontakt schließen kann.

Ein Aufschalten auf einen bestehenden Kurzschluss kann somit in jedem Fall verhindert werden. Eine Überhitzung des Schutzschalters tritt daher nicht auf.

Vorteilhafterweise umfasst die Sperreinrichtung, wie im Patentanspruch 3 angegeben, ein bewegliches Element, das eine Verschiebeeinrichtung blockiert, die zum Schließen des Hauptkontaktes dient. Das bewegliche Element ist dabei in eine Richtung beweglich, die quer zur Bewegungsrichtung der Verschiebeeinrichtung bei Schließen des Hauptkontaktes steht.

Um die Sperreinrichtung möglichst schnell zu machen, kann das erste bewegliche Element, wie im Patentanspruch 4 angegeben, der Anker des ersten magnetischen Systems sein.

Die Verschiebeeinrichtung, die ihrerseits aus einer Mehrzahl einzelner beweglicher Elemente bestehen kann, weist, wie im Patentanspruch 8 angegeben, vorteilhafterweise eine derartige Elastizität auf, dass einerseits im unblockierten Zustand der Hauptkontakt sicher geschlossen werden kann und dass andererseits im blockierten Zustand das Bedienungselement bis in eine Position verschoben werden kann, an der der Hauptkontakt normalerweise verschlossen ist.

Dient die Verschiebeeinrichtung dabei auch zum Schließen des Nebenkontaktes, weist selbstverständlich nur der Abschnitt der Verschiebeeinrichtung die im Anspruch 8 genannte Elastizität auf, der zum Schließen des Hauptkontaktes dient.

Vorteilhafte Weiterbildungen der Erfindung sind Gegenstand der Unteransprüche.

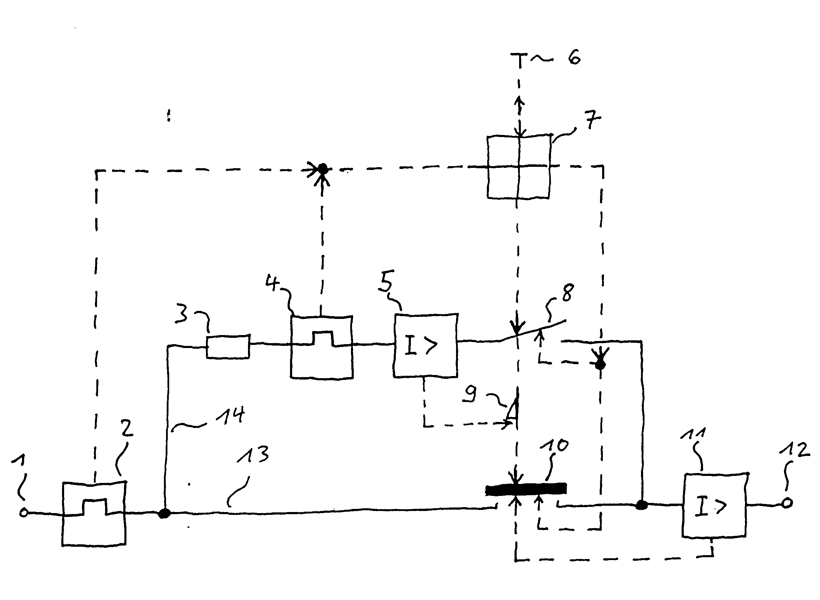

Die Erfindung wird nachfolgend anhand der Figur näher erläutert.

In der Figur ist als Ausführungsbeispiel ein selektiver Leitungsschutzschalter gezeigt. Die Anwendung der Erfindung beschränkt sich aber nicht auf einen selektiven Leitungsschutzschalter sondern kann auch bei jeder anderen Art von Schaltern eingesetzt werden.

In der Figur ist mit 1 eine Eingangsklemme, mit 2 ein erstes thermisches System, mit 3 ein Widerstand, mit 4 ein zweites thermisches System, mit 5 ein erstes magnetisches System, mit 6 ein Bedienungselement, mit 7 ein Schaltschloss, mit 8 ein Nebenkontakt, mit 9 eine Sperreinrichtung, mit 10 ein Hauptkontakt, mit 11 ein zweites magnetisches System, mit 12 eine Ausgangsklemme, mit 13 ein Hauptpfad und mit 14 ein Nebenpfad bezeichnet.

Der Hauptpfad 13 erstreckt sich von der Eingangsklemme 1 bis zur Ausgangsklemme 12 und umfasst das erste thermische System 2, den Hauptkontakt 10 und das zweite magnetische System 11.

Der Nebenpfad 14 überbrückt im Ausführungsbeispiel nur den Hauptkontakt 10, könnte aber auch darüber hinaus noch zusätzlich das erste thermische System 2 und/oder das zweite magnetische System 11 überbrücken. Der Nebenpfad umfasst den Widerstand 3, das zweite thermische System 4, das erste magnetische System 5 und den Nebenkontakt 8.

Ein Bedienungselement 6 ist von außen am Schutzschalter zugänglich und kann in eine erste oder zweite Position verbracht werden. In der zweiten Position ist der Schutzalter geschlossen, wohingegen er in der ersten Position geöffnet ist.

Das Schaltschloss 7 wird verriegelt, wenn das Bedienungselement 6 von der ersten in die zweite Position bewegt wird. Dabei werden im Normalfall der Hauptkontakt 10 und auch der Nebenkontakt 8 geschlossen. Im Verlauf der Bewegung des Bedienungselementes 6 von der ersten in die zweite Position wird dabei zunächst der Nebenkontakt 8 und dann der Hauptkontakt 10 geschlossen.

Wird dagegen das Bedienungselement 6 von der zweiten Position in die erste Position verbracht, wird dabei das Schaltschloss 7 entriegelt und der Nebenkontakt 8 sowie der Hauptkontakt 10 geöffnet.

Gleichzeitig lässt sich das Schaltschloss auch dadurch entriegeln, dass entweder das erste thermische System 2 oder das zweite thermische System 4 angesprochen hat. Dabei werden gleichfalls sowohl der Hauptkontakt 10 als auch der Nebenkontakt 8 geöffnet.

Das Schaltschloss 7 wirkt über eine nicht gezeigte Verbindungseinrichtung auf den Nebenkontakt 8 und den Hauptkontakt 10 ein. In diese Verbindungseinrichtung greift eine Sperreinrichtung 9 ein, die von dem ersten magnetischen System 5 aktiviert wird. Hierzu weist die Verbindungseinrichtung ein Loch oder einen Vorsprung auf, der es der Sperreinrichtung 9 ermöglicht, die Verbindungseinrichtung daran zu hindern, den Hauptkontakt zu schließen. Die Sperreinrichtung 9 weist hierzu ein bewegliches Element auf, das entweder den Vorsprung blockiert oder in das Loch eingreift, so dass ein Schließen des Hauptkontaktes 10 verhindert wird. Das bewegliche Element kann dabei der Anker des magnetischen Systems sein. Hierdurch wird die Ansprechdauer der
Sperreinrichtung verringert.

Die Verbindungseinrichtung weist einen ersten und einen zweiten Abschnitt auf, wobei sie mit dem ersten Abschnitt den Nebenkontakt 8 schließt und mit dem zweiten Abschnitt den Hauptkontakt 10 schließt. Der zweite Abschnitt weist dabei eine Elastizität auf, die es ermöglicht, bei mittels der Sperreinrichtung 9 blockierter Verbindungseinrichtung das Bedienungselement 6 in die zweite Position zu verbringen. Gleichzeitig ist die Elastizität dieses zweiten Abschnittes aber derart gering, dass bei nicht blockierter Verbindungseinrichtung der Hauptkontakt 10 sicher geschlossen werden kann.

Als nächstes soll die Funktionsweise des Schutzschalters gemäß der Figur erläutert werden.

Hierzu ist zunächst eine Fallunterscheidung zu treffen. Zu Unterscheiden sind der Normalfall, der Überlastfall und der Kurzschlussfall.

Im Normalfall fließt ein Strom durch den Schutzschalter, der unter dem Nennstrom des Schutzschalters liegt. Sowohl der Nebenkontakt 8 als auch der Hauptkontakt 10 sind geschlossen. Weder das erste thermische System 2 noch das zweite magnetische System 11 sprechen an. Der Nebenpfad 14 ist inaktiv, da er durch den Hauptkontakt 10 überbrückt ist.

Im Überlastfall fließt ein Strom durch den Schutzschalter, der den Nennstrom des Schutzschalters übersteigt, jedoch noch unter dem Kurzschlussstrom liegt. Das zweite magnetische System 11 spricht daher nicht an. Ebenfalls fließt kein Strom über den Nebenpfad 14, da dieser durch den Hauptkontakt 10 überbrückt ist. Jedoch wird das erste thermische System 2 in endlicher Zeit auslösen. Das kann bei einem hohen Überlaststrom innerhalb weniger Minuten passieren und bei einem geringen Überlaststrom auch über eine Stunde dauern. In jedem Fall wird bei Auslösen des ersten thermischen Systems 2 von diesem das Schaltschloss 7 entriegelt und hierdurch sowohl der Hauptkontakt 10 als auch der Nebenkontakt 8 geöffnet.

Da die erfindungsgemäße Sperreinrichtung vor allem zum Schutz des Hauptkontaktes dient, und das thermische System weitgehend verschleißfrei arbeitet, ist die Sperreinrichtung nun derart ausgelegt, dass sie bei Fortbestehen des Überlastfalles bei Wiedereinschalten den Hauptkontakt nicht blockiert. Dadurch werden in diesem Fall beim Wiedereinschalten sowohl der Nebenkontakt 8 als auch der Hauptkontakt 10 geschlossen.

Im Kurzschlussfall fließt ein Strom über den Schutzschalter, der den Nennstrom des Schutzschalters um ein mehrfaches überschreiten kann. In diesem Fall spricht das zweite magnetische System 11 an und drückt den Hauptkontakt 10 auf, ohne das Schaltschloss zu entriegeln. Ebenfalls bleibt der Nebenkontakt 8 geschlossen, so dass in diesem Fall der Nebenpfad 14 von Strom durchflossen wird. Der Nebenpfad 14 enthält den Widerstand 3, der den Strom durch den Nebenpfad 14 begrenzt. Besteht der Kurzschluss hinter dem Schutzschalter nun fort, wird schließlich das zweite thermische System 4 ansprechen und das Schaltschloss 7 entriegeln. Hierdurch wird auch der Nebenkontakt 8 geöffnet.

Wird nun versucht, den Schutzschalter trotz Fortbestehen des Kurzschlusses hinter dem Schutzschalter wieder einzuschalten, wird durch Betätigung des Bedienelementes 6 zunächst der Nebenkontakt 8 geschlossen und dabei das erste magnetische System 5 aktiviert. Hierdurch wird die Sperreinrichtung 9 in Gang gesetzt, so dass sich zwar mit Gewalt das Bedienelement 6 noch in die zweite Position verbringen lässt, ein Schließen des Hauptkontaktes 10 aber vermieden wird, da das bewegliche Element der Sperreinrichtung 9 in die Verschiebeeinrichtung eingreifen wird, bevor der Hauptkontakt 10 geschlossen werden kann.

Da in diesem Fall das zweite thermische System 4 wiederum aktiviert wird, kann auch das Schaltschloss nicht dauerhaft verriegelt werden, so dass das Bedienelement 6 wieder in die erste Position zurückfällt, sobald es nicht mehr in Richtung der zweiten Position gedrückt wird.

Bei dem gezeigten Ausführungsbeispiel kann somit wirkungsvoll verhindert werden, dass mittels des Schutzschalters auf einen bestehenden Kurzschluss aufgeschaltet wird. Da dies eine Abnutzung des Hauptkontaktes aber auch des gesamten Schutzschalters vermeidet, wird hierdurch die Lebensdauer des Schutzschalters maßgeblich erhöht.

Darüber hinaus wird durch diese Maßnahme selbstverständlich auch erreicht, dass der bestehende Kurzschluss nicht zu weiteren Schäden in dem elektrischen Versorgungssystem führt.

Alternativ zu dem oben genannten Ausführungsbeispiel kann die Sperreinrichtung 9 auch derart ausgelegt sein, dass sie nicht nur im Kurzschlussfall sondern auch bei Vorliegen eines Überlastfalles ein Wiedereinschalten des Schutzschalters verhindert. Sinnvollerweise ist in diesem Fall die Auslegung dann derart zu wählen, dass ein geringer Überlastfall ein Wiedereinschalten nicht verhindert, aber ein starker Überlastfall zur Verhinderung des Wiedereinschaltens ausreicht.

Bei Anwendung der Erfindung auf einen herkömmlichen, nicht selektiven Leitungsschutzschalter muss dieser ebenfalls einen Nebenpfad aufweisen, der zumindest den Hauptkontakt überbrückt. In diesem Fall umfasst der Nebenpfad aber lediglich einen vor dem Hauptkontakt schließenden Nebenkontakt und ein magnetisches System zur Aktivierung der Sperreinrichtung.

Gezeigt wird ein Schutzschalter mit einem Hauptkontakt zum Schließen des Schutzschalters, bei dem erfindungsgemäß eine Sperreinrichtung zum Verhindern des Schließens des Hauptkontaktes im Kurzschlussfall vorgesehen ist. Der Hauptkontakt kann dabei in einem Hauptpfad angeordnet sein, während in einem Nebenpfad, der zumindest den Hauptkontakt überbrückt, ein Nebenkontakt und ein erstes magnetisches System angeordnet sind. Beim Schließen des Schutzschalters wird zuerst der Nebenkontakt und dann der Hauptkontakt geschlossen. Im Kurzschlussfall wird daher beim Schließen des Schutzschalters die Sperreinrichtung von dem ersten magnetischen System aktiviert bevor der Hauptkontakt geschlossen werden kann. Hierdurch werden die Lebensdauer des Schutzschalters sowie die Betriebssicherheit sowohl des Schutzschalters als auch der zu schützenden Einrichtung maßgeblich erhöht (Figur).

## Patentansprüche

1. Schutzschalter mit
einem Hauptkontakt (10) zum Schließen des Schutzschalters,
**gekennzeichnet durch** eine Sperreinrichtung (9) zum Verhindern des Schließens des Hauptkontaktes im Kurzschlussfall

2. Schutzschalter nach Anspruch 1, **dadurch gekennzeichnet**,
dass der Hauptkontakt in einem Hauptpfad (13) angeordnet ist,
dass in einem Nebenpfad (14), der zumindest den Hauptkontakt überbrückt, ein Nebenkontakt (8) und ein erstes magnetisches System (5) angeordnet sind,
dass beim Schließen des Schutzschalters zuerst der Nebenkontakt und dann der Hauptkontakt geschlossen wird und
dass im Kurzschlussfall beim Schließen des Schutzschalters die Sperreinrichtung von dem ersten magnetischen System aktiviert wird, bevor der Hauptkontakt schließen kann.

3. Schutzschalter nach Anspruch 1 oder 2, **dadurch gekennzeichnet**,
dass die Sperreinrichtung ein bewegliches Element umfasst, das eine Verschiebeeinrichtung blockiert, die zum Schließen des Hauptkontaktes dient.

4. Schutzschalter nach Anspruch 3, **dadurch gekennzeichnet**,
dass das erste bewegliche Element der Anker des ersten magnetischen Systems ist.

5. Schutzschalter nach einem der vorhergehenden Ansprüche, **dadurch gekennzeichnet**,
dass ein Schaltschloss (7) vorgesehen ist, durch dessen Entriegelung der Hauptkontakt und der Nebenkontakt geöffnet werden.

6. Schutzschalter nach Anspruch 5, **dadurch gekennzeichnet**,
dass sich das Schaltschloss bei aktivierter Sperreinrichtung nicht verriegeln lässt.

7. Schutzschalter nach Anspruch 5 oder 6, **dadurch gekennzeichnet**,
dass ein Bedienelement (6) vorgesehen ist, bei dessen Bewegung von einer ersten in eine zweite Position im Normalfall der Hauptkontakt und der Nebenkontakt geschlossen und das Schaltschloss verriegelt wird und bei dessen Bewegung von der zweiten Position in die erste Position das Schaltschloss entriegelt wird.

8. Schutzschalter nach einem der Ansprüche 3 bis 7, **dadurch gekennzeichnet**,
dass die Verschiebeeinrichtung eine derartige Elastizität aufweist, dass im unblockierten Zustand der Hauptkontakt sicher geschlossen werden kann und dass im blockierten Zustand das Bedienungselement bis in die zweite Position verschoben werden kann.

9. Schutzschalter nach einem der vorhergehenden Ansprüche, **dadurch gekennzeichnet**,
dass ein zweites magnetisches System (11) im Hauptpfad vorgesehen ist, das beim Auftreten eines hohen Überstromes den Hauptkontakt öffnet, ohne das Schaltschloss zu entriegeln.

10. Schutzschalter nach einem der vorhergehenden Ansprüche,
**dadurch gekennzeichnet**,
dass im Hauptpfad ein erstes thermisches System angeordnet ist, das beim Auftreten eines länger andauernden Überstromes das Schaltschloss entriegelt.

11. Schutzschalter nach einem der vorhergehenden Ansprüche,
**dadurch gekennzeichnet**,
dass im Nebenpfad ein zweites thermisches System (4) angeordnet ist, das beim Auftreten eines länger andauernden Überstromes das Schaltschloss entriegelt, wenn der Hauptkontakt geöffnet ist.
